# DEMANDE DE BREVET EUROPEEN

(11) **EP 3 255 747 A1**
(43) Date de publication de la demande: **13.12.2017**
(21) Numéro de dépôt: 17174736.3
(22) Date de dépôt: 07.06.2017
(51) Int. Cl.: H02G 3/08

(54) **EMBOUT D ENTRÉE DE CONDUCTEURS ÉLECTRIQUES DANS UNE BOÎTE ÉLECTRIQUE**

(30) Priorité: 10.06.2016 FR 1655384
(71) Demandeur: Legrand France, 87000 Limoges (FR); Legrand SNC, 87000 Limoges (FR)
(72) Inventeur: CAILLE, Jean-Loup, 87510 Peyrilhac (FR); LONGEVILLE, Jérome, 87350 Panazol (FR); CHAUMENY, Jean-Luc, 87590 Saint-Just le Martel (FR)
(74) Mandataire: Jacobacci Coralis Harle

(57) **Abrégé**

L'invention concerne un embout (100) d'entrée de conducteurs électriques dans une boîte électrique, comportant une paroi (101) qui délimite un canal (103) pour le passage des conducteurs électriques selon un axe d'insertion (A1) longitudinal, cette paroi comprenant :
- du côté d'une extrémité distale, une partie de fixation (110) pour sa fixation à une boîte électrique,
- du côté d'une extrémité proximale, des moyens de connexion (120) à une gaine de cheminement pour conducteurs électriques, et
- une membrane d'étanchéité (140) qui s'étend transversalement audit axe d'insertion, et qui est adaptée à être traversée par les conducteurs électriques circulant dans ledit canal.

Selon l'invention, lesdits moyens de connexion comportent une lèvre périphérique (121), distincte de la membrane d'étanchéité, qui s'étend à partir de ladite paroi, en direction dudit axe d'insertion, et la paroi comporte, sur une partie au moins de sa longueur, un élément de rigidification (102) qui présente une rigidité à la flexion supérieure à celle de la lèvre périphérique.

## Description

### DOMAINE TECHNIQUE AUQUEL SE RAPPORTE L'INVENTION

La présente invention concerne de manière générale les boîtes électriques, notamment les boîtes de dérivation et les boîtes de réception d'appareillages électriques (interrupteur, prise de courant,...).

Elle concerne plus particulièrement un embout d'entrée de conducteurs électriques dans une boîte électrique, comportant une paroi qui délimite un canal pour le passage des conducteurs électriques selon un axe d'insertion longitudinal, cette paroi comprenant :
- du côté d'une extrémité distale, une partie de fixation pour sa fixation à une boîte électrique, et
- du côté d'une extrémité proximale, des moyens de connexion à une gaine de cheminement pour conducteurs électriques,
ledit embout comprenant en outre une membrane d'étanchéité qui s'étend transversalement audit axe d'insertion, et qui est adaptée à être traversée par les conducteurs électriques circulant dans ledit canal.

Elle concerne également une boîte électrique qui présente une ouverture d'entrée dans laquelle est fixé un embout tel que précité.

### ARRIERE-PLAN TECHNOLOGIQUE

Généralement, une boîte électrique comporte une paroi latérale fermée à l'arrière par un fond. Elle comporte en outre extérieurement des moyens de fixation à une paroi, et intérieurement des moyens d'assujettissement d'un appareillage électrique.

Pour la desserte électrique de cet appareillage, une boîte électrique comporte généralement en partie arrière des opercules défonçables qui permettent d'ouvrir localement sa paroi pour introduire dans son volume intérieur une gaine de cheminement de fils électriques.

L'inconvénient majeur d'une telle boîte est que, lorsqu'elle est installée dans une cloison creuse d'une habitation, l'air présent à l'intérieur de la cloison creuse peut s'introduire dans l'habitation au travers des ouvertures pratiquées dans la boîte. Une telle boîte nuit alors à la qualité de l'isolation thermique de l'habitation.

Pour remédier à ce problème, on connaît du document FR3020517 un embout prévu pour se connecter, d'un côté, à l'extrémité d'une gaine de cheminement, et, de l'autre, au bord d'une ouverture pratiquée en correspondance dans la boîte. Cet embout permet donc de faire la fonction entre la gaine et la boîte, en empêchant toute circulation d'air entre l'extérieur de la gaine et l'intérieur de la boîte.

Toutefois, un tel embout génère encore des problèmes d'isolation du fait de la circulation de l'air à l'intérieur de la gaine.

Pour remédier également à ce problème, on connaît du document EP2363933 un embout dans lequel il est prévu intérieurement un opercule d'étanchéité qui est troué pour permettre le passage des seuls conducteurs électriques. Cet opercule d'étanchéité permet donc de bloquer la circulation de l'air depuis la gaine de cheminement vers l'intérieur de la boîte.

Dans ce document, on observe que l'embout est prévu pour se connecter à des gaines de cheminement d'un diamètre particulier et pour permettre le passage de conducteurs électriques d'une section particulière, sous peine que l'embout ne soit pas en mesure d'assurer la fonction d'étanchéité recherchée.

Il est donc nécessaire de prévoir autant de références d'embouts qu'il existe de diamètres de gaines et de conducteurs électriques, au détriment des coûts de fabrication et de stockage de ces embouts.

### OBJET DE L'INVENTION

Afin de remédier aux inconvénients précités de l'état de la technique, la présente invention propose un nouvel embout permettant de recevoir des gaines de différents diamètres, sans que cette capacité ne nuise aux caractéristiques d'étanchéité à l'air de cet embout.

Plus particulièrement, on propose selon l'invention un embout tel que défini dans l'introduction, dans lequel lesdits moyens de connexion comportent une lèvre périphérique, distincte de la membrane d'étanchéité, qui s'étend à partir de ladite paroi, en direction dudit axe d'insertion, et la paroi comporte, sur une partie au moins de sa longueur, un élément de rigidification qui présente une rigidité à la flexion supérieure à celle de la lèvre périphérique.

Par « rigidité à la flexion », on entend qu'il est nécessaire d'appliquer un effort plus grand sur l'élément de rigidification que sur la lèvre périphérique pour les faire fléchir d'une même distance.

Cet élément de rigidification pourra se présenter sous des formes différentes. Il pourra ainsi par exemple se présenter sous la forme d'une surépaisseur. En variante, il pourra se présenter sous la forme d'un insert rigide.

Grâce à l'invention, la lèvre périphérique est adaptée à s'appliquer sur la face externe de gaines de diamètres différents, en s'étirant plus ou moins.

L'élément de rigidification permet quant à lui d'éviter que l'embout ne s'écrase longitudinalement, lorsqu'on enfile une gaine de cheminement dans la lèvre périphérique.

La lèvre périphérique et l'élément de rigidification se combinent donc avantageusement, en ce sens que sans l'un de ces deux éléments, il ne serait pas possible d'engager sans difficulté des gaines de différents diamètres dans l'embout.

On notera ici que la gaine pourra se présenter sous la forme d'une gaine annelée creuse, d'un tube lisse creux, ou encore d'une gaine externe de câble électrique (moulée sur des fils électriques gainés).

D'autres caractéristiques avantageuses et non limitatives de l'embout conforme à l'invention sont les suivantes :
- ledit élément de rigidification présentant une extrémité proximale tournée vers l'extrémité proximale de la paroi et une extrémité distale tournée vers l'extrémité distale de la paroi, ladite lèvre périphérique s'étend à distance de l'extrémité distale dudit élément de rigidification ;
- ladite partie de fixation s'étend à distance de l'extrémité distale dudit élément de rigidification ;
- ledit élément de rigidification comporte une surépaisseur en saillie sur une face externe de ladite paroi ;
- la paroi est formée d'une seule pièce mono-matière ;
- ladite lèvre périphérique présente une forme sensiblement conique ou tronconique ;
- ladite lèvre périphérique présente une épaisseur qui se réduit vers son sommet ;
- ladite lèvre périphérique délimite une ouverture et porte, le long de cette ouverture, un bourrelet en surépaisseur ;
- ladite lèvre périphérique et ladite membrane d'étanchéité sont respectivement situées aux deux extrémités distale et proximale de la paroi ;
- la partie de fixation de la paroi comporte une gorge périphérique qui s'étend dans une face externe de la paroi ; ou
- la partie de fixation de la paroi est fixée à une embase creuse sur laquelle est également fixée au moins une autre paroi du même type et sur laquelle sont ménagés des moyens de montage sur une partie de la boîte électrique.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- les figures 1 et 2 sont des vues schématiques en perspective d'un premier mode de réalisation d'un embout conforme à l'invention, représenté sous deux angles différents ;
- la figure 3 est une vue en coupe selon la plan A-A de la figure 1 ;
- la figure 4 est une vue schématique en perspective d'une boîte de dérivation équipée de huit embouts tels que celui représenté sur la figure 1 ;
- les figures 5 à 7 sont des vues schématiques en coupe de l'embout de la figure 1, illustrant la mise en place d'une gaine de cheminement et de fils électriques au travers de cet embout ;
- les figures 8 et 9 sont des vues schématiques en perspective d'un second mode de réalisation d'un embout conforme à l'invention, représenté sous deux angles différents ;
- la figure 10A est une vue en coupe selon la plan B-B de la figure 9 ;
- la figure 10B est une vue homologue de la figure 10A, sur laquelle est représentée une variante de réalisation de l'embout de la figure 8 ;
- les figures 11 à 13 sont des vues schématiques en perspective d'un étrier de boîte électrique et de l'embout de la figure 8, illustrant la mise en place de cet embout sur cet étrier ;
- les figures 14 et 15 sont des vues schématiques en perspective d'un troisième mode de réalisation d'un embout conforme à l'invention, représenté sous deux angles différents ; et
- la figure 16 est une vue en coupe selon la plan C-C de la figure 15.

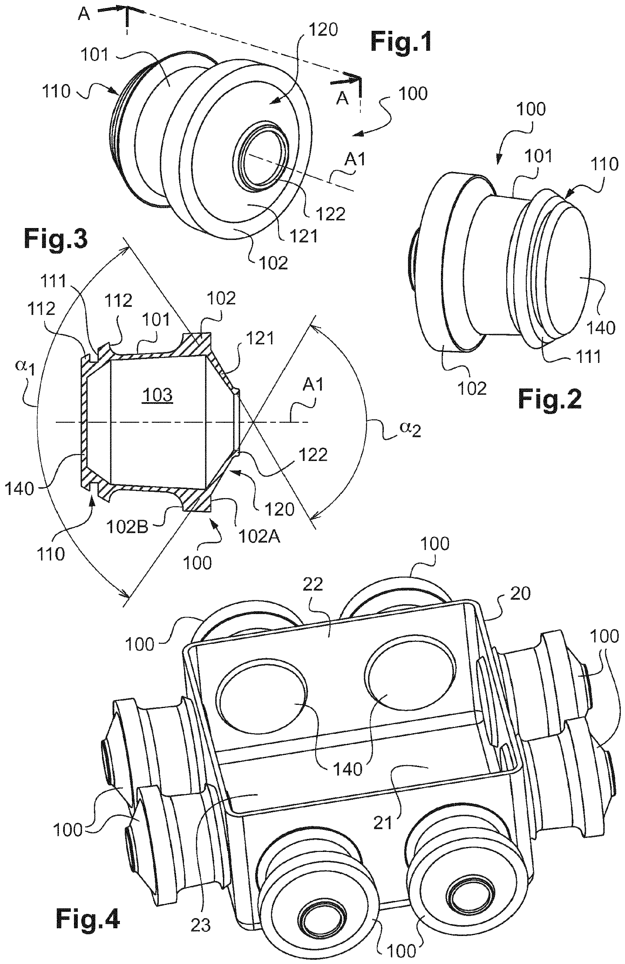

Sur les figures 1 à 7, 8 à 13 et 14 à 16, on a respectivement représenté trois modes de réalisation d'un embout, lequel est respectivement référencé 100 ; 200 ; 300.

Dans tous ces modes de réalisation, l'embout 100 ; 200 ; 300 est conçu pour permettre l'entrée de conducteurs électriques (typiquement de fils électriques gainés) dans une boîte électrique, de manière à répondre à des critères ou normes d'étanchéité à l'air.

La boîte électrique pourra présenter diverses formes. Il s'agira préférentiellement d'une boîte électrique à encastrer dans une cavité pratiquée dans une paroi, par exemple dans une cloison creuse.

On rappelle à ce sujet que, de manière connue, une telle cloison creuse est généralement composée d'une structure métallique (formé de montants verticaux et de rails horizontaux) et de panneaux de plâtre rapportés sur l'une au moins des deux faces de la structure métallique.

A ce stade, on notera que dans la description, les termes « avant » et « arrière » seront utilisés par rapport à la direction du regard de l'installateur de la boîte électrique dans le panneau de plâtre. Ainsi, les termes avant et arrière désigneront respectivement le lieu tourné vers l'intérieur de la pièce et le lieu tourné vers l'intérieur de la cloison creuse.

Bien entendu, en variante, la paroi pourrait être formée, non pas par une cloison creuse du type précité, mais par toute autre paroi (par exemple par une paroi maçonnée, par une paroi banchée, par une dalle de béton coulée, ...).

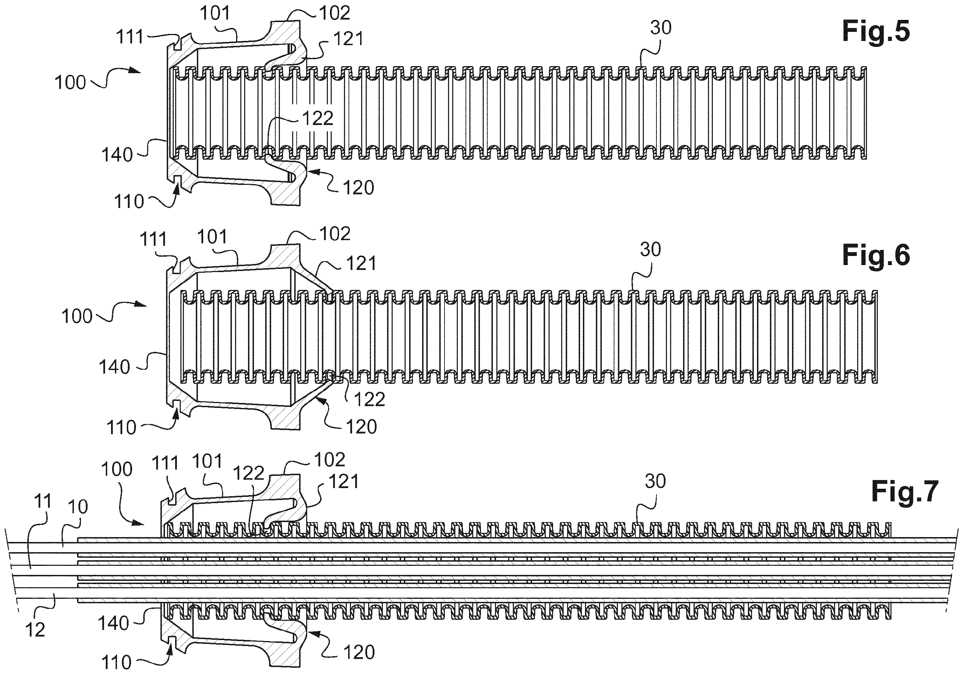

Quoi qu'il en soit, comme le montrent les figures 5 à 7, les fils électriques 10, 11, 12 qui courent dans la paroi sont généralement tirés dans des gaines de cheminement 30 qui les protègent.

Différents types de gaines de cheminement 30 existent.

Typiquement, comme le montrent les figures 5 à 7, il peut s'agir de gaines de type ICTA. De telles gaines sont réalisées en plastique, sont annelées et souples, et sont constituées d'une succession d'anneaux et de gorges.

En variante, il pourrait s'agir de tubes lisses, rigides ou souples, communément désignés par les références IRL ou ICTL.

Encore en variante, il pourrait s'agir de gaines d'isolation de câbles électriques, surmoulées sur des fils électriques.

La présente invention porte alors sur la manière de connecter l'extrémité d'une telle gaine de cheminement 30 à une boîte électrique.

Pour bien illustrer l'invention, on a représenté sur la figure 4 un exemple de boîte électrique 20. Il s'agit ici d'une boîte de dérivation, qui comporte un fond 21 carré, bordé à l'avant par une paroi latérale 22 qui délimite un logement de réception 23.

Une telle boîte de dérivation 20 est généralement utilisée à un carrefour de gaines de cheminement 30. Elle est ainsi prévue pour recevoir dans son logement de réception 23 des borniers (par exemple de type domino ou Wago^{®}) permettant de connecter entre eux les fils électriques 10, 11, 12 issus de ces différentes gaines de cheminement 30.

Pour permettre l'insertion des fils électriques 10, 11, 12 dans son logement de réception 23, la boîte de dérivation 20 comporte des ouvertures d'entrée de câbles. Elle comporte ici quatre paires d'ouvertures d'entrée de câbles, respectivement situées dans les quatre côtés de sa paroi latérale 22.

Bien entendu, la boîte électrique pourrait présenter une forme différente.

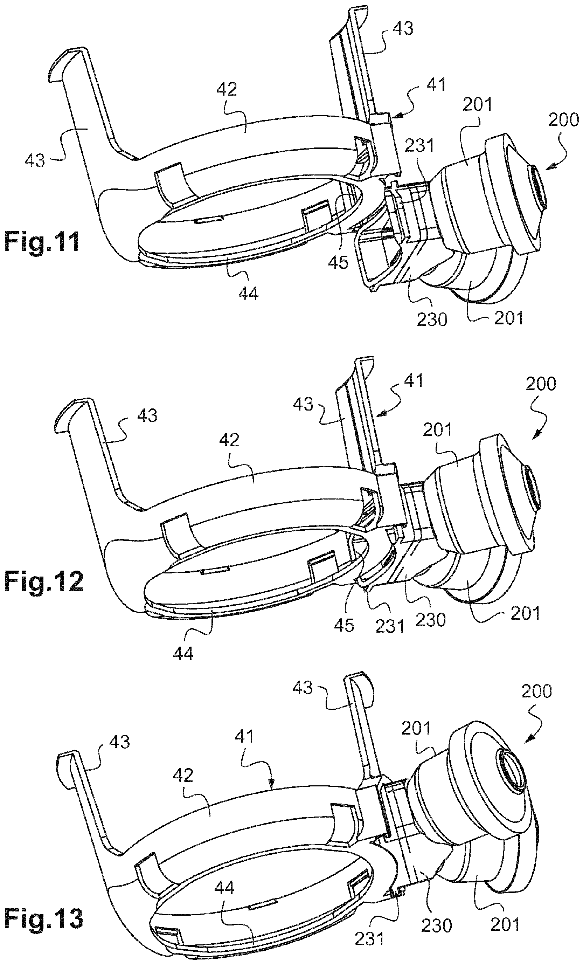

Ainsi, sur les figures 11 à 13, on a représenté une partie d'une boîte électrique d'un autre type. Il s'agit ici d'un étrier 41, conçu pour se placer à l'arrière d'un boîtier afin de faciliter la connexion d'un mécanisme d'appareillage (prise de courant, interrupteur, ...) logé dans ce boîtier. Un étrier proche de celui illustré sur ces figures 11 à 13 est par exemple décrit plus en détail dans le document FR3020520.

Cet étrier 41 ne faisant pas l'objet de la présente invention, il ne sera pas ici décrit en détail. On observera seulement qu'il comporte une embase annulaire 42, à partir de laquelle s'élèvent vers l'avant deux bras 43 dont les extrémités recourbées sont prévues pour s'appuyer contre la face avant du panneau de plâtre de la cloison creuse.

Son embase 42 délimite une large ouverture circulaire 44 prévue pour recevoir une platine équipée d'éléments de connexion de fils électriques. L'embase 42 délimite en outre latéralement une ouverture d'entrée de câbles 45 de forme rectangulaire.

Pour résumer, à ce stade de l'exposé, on retiendra donc que quel que soit le mode de réalisation de la boîte électrique, cette dernière présente au moins une ouverture d'entrée de câbles permettant aux fils électriques 10, 11, 12 d'entrer à l'intérieur de la boîte électrique (pour la desserte en courant du mécanisme d'appareillage ou pour leur connexion à d'autres fils électriques).

Il est alors prévu d'équiper chaque ouverture d'entrée de câbles d'un embout 100 ; 200 ; 300 adapté à faire la jonction entre la boîte électrique et au moins une gaine de cheminement.

Dans tous les modes de réalisation de l'embout 100 ; 200 ; 300, ce dernier comporte au moins une paroi, ici une paroi tubulaire 101 ; 201 ; 301, qui délimite un canal 103 ; 203 ; 303 prévu pour être traversé longitudinalement par les fils électriques 10, 11, 12 issus de la gaine de cheminement 30.

Cette paroi tubulaire 101 ; 201 ; 301 présente une forme de révolution autour d'un axe d'insertion A1 (voir figure 1).

Elle présente deux extrémités, l'une située d'un côté proximal (du côté de l'installateur lorsque ce dernier rapporte cet embout sur la boîte électrique) et l'autre située d'un côté distal.

La paroi tubulaire 101 ; 201 ; 301 porte alors, du côté de son extrémité distale, une partie de fixation 110 ; 210 ; 310 pour sa fixation à la boîte électrique. Cette partie de fixation 110 ; 210 ; 310 est ajustée aux dimensions de l'ouverture d'entrée de câbles de la boîte électrique. De cette manière, l'embout 100 ; 200 ; 300 est conçu pour assurer l'étanchéité au niveau de cette ouverture d'entrée de câbles.

Pour assurer l'étanchéité entre l'intérieur de la gaine de cheminement 30 et l'intérieur de la boîte électrique, l'embout comporte une membrane d'étanchéité 140 ; 240 ; 340 qui s'étend transversalement à l'axe d'engagement A1 et qui est adaptée à être traversée par les fils électriques 10, 11, 12. Cette membrane d'étanchéité 140 ; 240 ; 340 est conçue de telle sorte que lorsqu'elle est traversée par les fils électriques 10, 11, 12 au niveau de trous de passage, ces trous de passage sont ajustés aux dimensions des fils électriques 10, 11, 12 de façon à assurer l'étanchéité.

L'embout 100; 200; 300 porte par ailleurs, du côté de son extrémité proximale, des moyens de connexion 120 ; 220 ; 320 permettant d'y fixer la gaine de cheminement 30.

Selon une caractéristique particulièrement avantageuse de l'invention, ces moyens de connexion 120; 220; 320 comportent au moins une lèvre périphérique 121 ; 221 ; 321 (distincte de la membrane d'étanchéité 140 ; 240 ; 340) qui s'étend à partir de la paroi tubulaire 101 ; 201 ; 301, vers l'axe d'engagement A1. Il est en outre prévu que la paroi tubulaire 101 ; 201 ; 301 comporte, sur une partie au moins de sa longueur, un élément de rigidification 102 ; 202 ; 302 qui présente une rigidité à la flexion supérieure à celle de la lèvre périphérique 121 ; 221 ; 321.

En pratique, cet élément de rigidification 102 ; 202 ; 302 s'étend sur une partie seulement de la longueur de la paroi tubulaire 101 ; 201 ; 301 et présente une rigidité à la flexion supérieure à celle de la partie restante de la paroi tubulaire 101 ; 201 ; 301.

Pour bien comprendre l'invention, on pourra décrire successivement les trois modes de réalisation de l'embout 100 ; 200 ; 300.

Dans le premier mode de réalisation représenté sur les figures 1 à 7, l'embout 100 est conçu pour connecter une seule gaine de cheminement 30 à une ouverture d'entrée de câbles.

Comme le montrent bien les figures 1 à 3, sa paroi tubulaire 101 présente un diamètre intérieur qui se réduit légèrement, depuis son extrémité proximale vers son extrémité distale.

La partie de fixation 110 de cette paroi tubulaire 101 sur la boîte de dérivation 20 de la figure 4 se présente sous la forme d'un moyen d'encliquetage conformé pour venir se clipser sur le bord d'une ouverture d'entrée de câbles de la boîte de dérivation 20. Cette partie de fixation 110 comporte ici deux nervures périphériques 112 qui s'étendent en saillie sur la face externe de la paroi tubulaire 101, tout autour de cette dernière, et qui délimitent entre elles une gorge périphérique 111.

Cette gorge périphérique 111 présente une symétrie de révolution autour de l'axe d'engagement A1. Le diamètre intérieur de cette gorge périphérique 111 est égal, au jeu de montage près, au diamètre de l'ouverture d'entrée de câbles de la boîte de dérivation 20. La largeur de cette gorge périphérique 111 est égale, au jeu de montage près, à l'épaisseur de la paroi latérale 22 de la boîte de dérivation 20.

L'embout 100 est de préférence monobloc. Il est ainsi avantageusement formé d'une seule pièce par moulage. Il peut être réalisé en une seule matière (on parle de moulage simple) ou en plusieurs matières (on parle de surmoulage).

L'embout 100 étant ici réalisé d'une seule pièce en une matière souple (ici en polypropylène ou en SEBS - « polystyrène-b-poly(éthylène-butylène)-b-polystyrène »), il peut être déformé élastiquement de manière que sa gorge périphérique 111 vienne s'engager sur le bord de l'ouverture d'entrée de câbles correspondante de la boîte de dérivation 20.

L'étanchéité au niveau de cette ouverture est donc bien assurée.

On notera ici que par « souple », on entend que la matière utilisée présente un module d'Young inférieur à 0,5 GPa.

Pour assurer l'étanchéité autour des fils électriques 10, 11, 12, la membrane d'étanchéité 140 est ici prévue pour être percée par les fils.

Comme le montrent bien les figures 2 et 3, cette membrane d'étanchéité 140 est ici plane et elle s'étend orthogonalement à l'axe d'engagement A1. Initialement, elle ferme complètement l'extrémité distale de la paroi tubulaire 101.

Elle présente une épaisseur faible de manière que les extrémités des fils électriques 10, 11, 12 puissent la transpercer facilement. Du fait de la souplesse de la matière utilisée pour fabriquer l'embout 100, une fois transpercée, le bord de chaque trou pratiqué dans la membrane d'étanchéité 140 vient s'appliquer tout autour du fil électrique correspondant, de sorte que l'étanchéité au niveau de ce trou est bien assurée (voir figure 7).

En variante, on pourrait prévoir que la membrane d'étanchéité soit initialement percée ou qu'elle présente des opercules défonçables ou découpables, facilitant la traversée des fils électriques.

Comme le montrent bien les figures 1 et 3, la lèvre périphérique 121 s'étend à partir du bord de l'extrémité opposée de la paroi tubulaire 101.

Cette lèvre périphérique 121 pourrait présenter une forme annulaire plane.

Toutefois, ici et de manière préférentielle, elle présente une forme sensiblement tronconique et elle est orientée de telle manière que son sommet pointe vers l'extérieur de l'embout 100.

Cette lèvre périphérique 121 présente une épaisseur qui se réduit vers son sommet tronqué.

Plus précisément, comme le montre la figure 3, sa face interne s'étend selon une surface conique d'angle au sommet α₁ égal à 110 degrés, tandis que sa face externe s'étend selon une surface conique d'angle au sommet α₂ égal à 120 degrés.

Le bord du sommet tronqué de la lèvre périphérique 121 délimite une ouverture circulaire par laquelle est destinée à s'engager la gaine de cheminement de câbles 30. Il porte ici un bourrelet 122 en surépaisseur qui longe cette ouverture circulaire et qui permet d'accroître la résistance au déchirement de la lèvre périphérique 121.

A l'état non étiré, l'ouverture circulaire délimitée par la lèvre périphérique 121 présente un diamètre strictement supérieur à celui d'un fil électrique gainé (dont la section de l'âme conductrice est de 1,5mm²). Ainsi est-il possible d'engager facilement trois fils électriques au travers de cette ouverture, sans avoir à déformer la lèvre périphérique 121. La lèvre périphérique 121 est ainsi seulement prévue pour se déformer lorsque l'on y engage une gaine de cheminement dont le diamètre externe est strictement supérieur à 10 millimètres.

Comme le montrent les figures 1 à 3, la paroi tubulaire 101 porte par ailleurs en saillie sur sa face externe une surépaisseur 102, qui forme ledit élément de rigidification.

En pratique, cette surépaisseur 102 présente une forme de bague autour de la paroi tubulaire 101. Elle présente une symétrie de révolution autour de l'axe d'engagement A1.

Cette surépaisseur 102 s'étend préférentiellement sur une partie seulement de la longueur de la paroi tubulaire 101. Elle s'étend préférentiellement du côté proximal de la paroi tubulaire 101. Si on considère que la paroi tubulaire 101 présente une moitié proximale et une moitié distale, la surépaisseur 102 s'étend ainsi entièrement sur la moitié proximale de la paroi tubulaire 101. Plus précisément ici, la surépaisseur 102 longe l'extrémité proximale de la paroi tubulaire 101.

Comme le montre la figure 3, cette surépaisseur 102 présente deux faces d'extrémité, dont une face d'extrémité proximale 102A tournée du côté de l'extrémité proximale de la paroi tubulaire 101 et une face d'extrémité distale 102B tournée du côté de l'extrémité distale de la paroi tubulaire 101.

La surépaisseur 102 est alors placée de telle manière que sa face d'extrémité distale 102B se trouve située entre, d'un côté, la nervure 111, et, de l'autre, la lèvre périphérique 121.

Ainsi, comme le montre la figure 5, il est possible d'engager l'extrémité d'une gaine de cheminement 30 au travers de l'ouverture circulaire délimitée par la lèvre périphérique 121, en déformant élastiquement cette dernière de manière qu'elle se retrousse vers l'intérieur de l'embout 100 et que son bourrelet 122 s'engage dans une gorge de la gaine de cheminement 30.

Comme le montre la figure 6, lorsque l'effort exercé sur la gaine est relâché, l'élasticité de l'embout 100 permet de repousser la gaine vers l'extérieur de manière que la lèvre périphérique 121 revienne à l'extérieur de la paroi tubulaire 101 de l'embout 100.

Comme le montre la figure 7, il est également possible d'engager la gaine de cheminement 30 lorsque cette dernière est déjà câblée, les fils électriques 10, 11, 12 perçant alors sans difficulté la membrane d'étanchéité 140.

En résumé, la lèvre périphérique 121 assure la tenue mécanique de la gaine de cheminement 30 dans l'embout 101.

Le bourrelet 122, qui s'étend sur le bord d'extrémité de cette lèvre périphérique 121, forme alors une sorte de verrou bloquant la lèvre périphérique 121 dans une gorge de la gaine de cheminement 30. Ce bourrelet présente, du fait de son épaisseur, une résistance à la déchirure supérieure à celle de la lèvre, ce qui prévient toute rupture de cette lèvre. Il permet ainsi de concevoir un embout 100 avec une lèvre périphérique 121 particulièrement fine.

La membrane d'étanchéité 141, grâce à son caractère élastique, est quant à elle prévue pour s'appliquer autour de chaque fil électrique, ce qui assure l'étanchéité entre les fils électriques 10, 11, 12 et l'intérieur de l'embout 100.

La surépaisseur 102 en forme de bague autour de la paroi tubulaire 101 permet quant à elle d'éviter que la paroi tubulaire 101 ne s'écrase axialement lorsque la gaine de cheminement 30 est rapportée dans l'embout 100. Sans cette surépaisseur 102, la paroi tubulaire 101 s'écraserait en effet longitudinalement, ce qui ne permettrait pas à l'installateur d'engager facilement la gaine de cheminement 30 dans la lèvre périphérique 121, sans l'aide d'outil.

La forme conique de cette lèvre périphérique 121 est particulièrement avantageuse en ce sens qu'elle permet d'offrir à la gaine de cheminement 30 une plus grande course d'insertion dans l'embout 100, pour un encombrement restreint de l'embout 100.

On comprend en effet qu'il n'est pas possible d'enfoncer l'extrémité de la gaine de cheminement 30 au-delà de l'extrémité distale de la paroi tubulaire 101, du fait de la membrane d'étanchéité 140 qui forme obstacle au passage de la gaine.

Comme le montre la figure 5, il faut donc que la lèvre périphérique 121 se soit retroussée sur la gaine de cheminement 30 au moment où cette dernière atteint la membrane d'étanchéité 140. Si cette condition est facilement remplie lorsque la gaine présente un diamètre proche de celui de l'ouverture circulaire délimitée par la lèvre périphérique 121, il n'en va pas de même lorsqu'elle présente un diamètre sensiblement supérieur. C'est la raison pour laquelle il s'avère nécessaire d'offrir à la gaine une grande course d'insertion.

De cette manière, il est possible de proposer une seule référence d'embout 100 permettant de recevoir des gaines de diamètres allant de 16 à 20 millimètres.

On observe par ailleurs que la course offerte par la forme conique de la lèvre périphérique 121 reste utile par la suite, après la mise en place de la gaine de cheminement 30 dans l'embout 100. Cette course offre en effet un degré de liberté supplémentaire à la gaine de cheminement 30. Ainsi, lorsqu'il s'agit de rapporter la boîte de dérivation 20 dans la cloison creuse, l'installateur a moins de difficultés à forcer la gaine de cheminement 30 à rentrer à l'intérieur de la cloison creuse.

Ici, la surépaisseur 102 en forme de bague autour de la paroi tubulaire 101 ne s'étend que sur une partie de la longueur de cette paroi tubulaire, de manière que cette dernière reste facilement déformable en flexion. Cette aptitude permet également d'offrir des degrés de liberté supplémentaires à la gaine de cheminement 30 lorsqu'il s'agit de rapporter la boîte de dérivation 20 dans la cloison creuse.

Préférentiellement, la lèvre périphérique 121 et la membrane d'étanchéité 140 s'étendent aux deux extrémités de la paroi tubulaire 101.

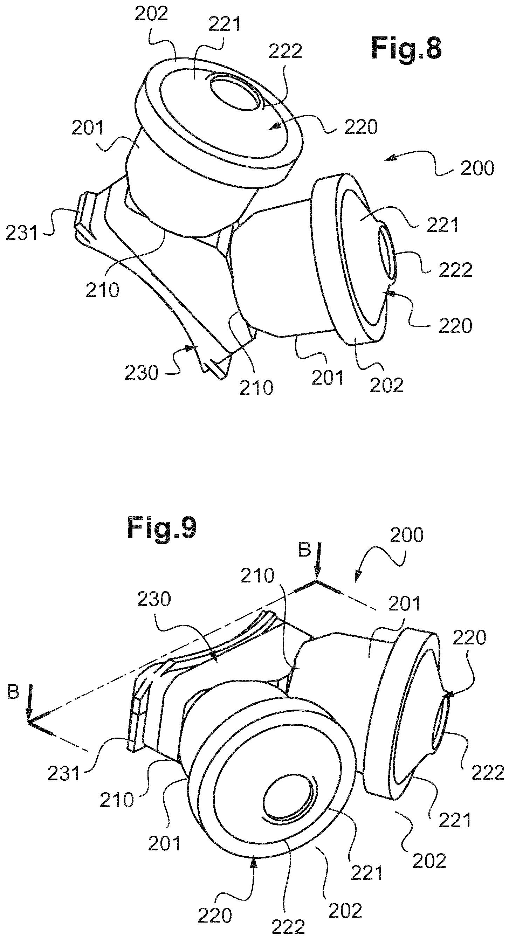

On peut maintenant décrire, en référence aux figures 8 à 13, le second mode de réalisation de l'embout 200.

Dans ce second mode, l'embout 200 est conçu pour connecter deux gaines de cheminement 30 à l'ouverture d'entrée de câbles 45 de l'étrier 41 de la boîte électrique.

Il comporte à cet effet une embase creuse 230 et deux parois tubulaires 201 du même type, fixés à cette embase creuse 230.

Ici, les deux parois tubulaires 201 présentent des diamètres identiques, mais on pourrait prévoir en variante qu'elles présentent des diamètres différents, de manière à pouvoir recevoir des gaines de cheminement de diamètres très différents.

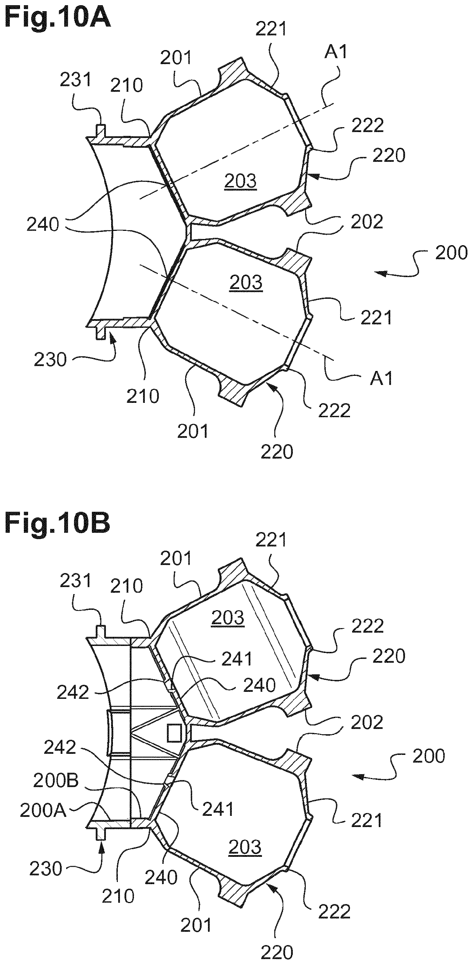

Ici, comme le montre la figure 10A, les parois tubulaires 201 sont quasi-identiques à la paroi tubulaire 101 de l'embout 100 représenté sur la figure 1. Seules leurs parties de fixation 210 diffèrent de celle de l'embout 100.

En effet, dans ce second mode, les parois tubulaires 201 ne portent pas de nervures périphériques en saillie sur leurs faces externes. Leurs extrémités distales sont au contraire directement fixées à l'embase creuse 230.

En pratique, les deux parois tubulaires 201 et une partie au moins de l'embase creuse 230 viennent de formation d'une seule pièce, par moulage.

Comme le montrent les figures 8 à 10A, l'embase creuse 230 présente une forme tubulaire de section rectangulaire.

Son extrémité distale, prévue pour se connecter à l'étrier 41, est complètement ouverte vers l'extérieur.

Son extrémité proximale est en revanche fermée par une paroi comportant deux pans inclinés, sur chacun desquels se rattachent respectivement les parties de fixation 210 des deux parois tubulaires 201. Ces pans inclinés forment donc les membranes d'étanchéité 240 de ces parois tubulaires 201.

En variante, on aurait pu prévoir que l'embout 200 comporte une seule et unique membrane d'étanchéité, située dans l'embase creuse 230.

Ici, l'embase creuse 230 porte sur sa face externe des moyens de montage 231 sur l'étrier 41.

Comme le montrent les figures 11 à 13, ces moyens de montage sont conçus pour permettre de monter l'embout 200 sur l'étrier 41 par un mouvement de coulissement selon une direction orthogonale au plan dans lequel s'étendent les axes d'insertion A1 des deux parois tubulaires 201.

Ces moyens de montage 231 comportent en l'espèce une nervure qui s'étend en saillie sur trois des quatre côtés de la face externe de l'embase creuse 230, et qui est prévue pour s'engager dans des rainures prévues en correspondance sur le bord de l'ouverture d'entrée de câbles 45 de l'étrier 41.

Comme le montre la figure 13, une fois l'embout 200 installé sur l'étrier 41, il est possible d'y engager deux gaines de cheminement de câbles, typiquement une première gaine pour la desserte en courant du mécanisme d'appareillage logé dans la boîte électrique à laquelle appartient l'étrier 41, et une seconde gaine permettant de repiquer un autre appareillage électrique en parallèle (ou « en dérivation ») du premier appareillage électrique.

Dans ce mode de réalisation, l'embout 200 est réalisé en une seule matière.

Selon une variante de ce mode de réalisation, représentée sur la figure 10B, l'embout 200 peut être bi-matière.

Comme le montre cette figure 10B, dans cette variante, une partie 200A au moins de l'embase creuse 230 est réalisée en une première matière rigide (par exemple en polypropylène) tandis que le reste 200B de l'embout est réalisé dans une matière plus souple (par exemple en élastomère thermoplastique SEBS). L'utilisation d'une matière rigide permet de faciliter le montage de l'embout sur la boîte électrique.

Dans la variante représentée sur cette figure 10B, chaque membrane d'étanchéité 240 ne ferme pas entièrement le conduit tubulaire 201 correspondant. Chaque membrane est ainsi fabriquée de manière percée, par exemple par un trou 241 central circulaire, en vue de faciliter l'introduction des fils électriques au travers de cette membrane.

Dans cette variante, ce trou 241 est de préférence bordé par un bourrelet 242 (la membrane présenter le long du bord du trou 241 une surépaisseur), de façon à éviter toute déchirure de la membrane lors de l'introduction des fils électriques.

De préférence, à l'état non étiré, ce trou 241 présente un diamètre strictement inférieur à celui d'un fil électrique gainé dont la section de l'âme conductrice est de 1,5mm².

Il présente ici un diamètre supérieur à celui prévu dans chaque lèvre périphérique 221.

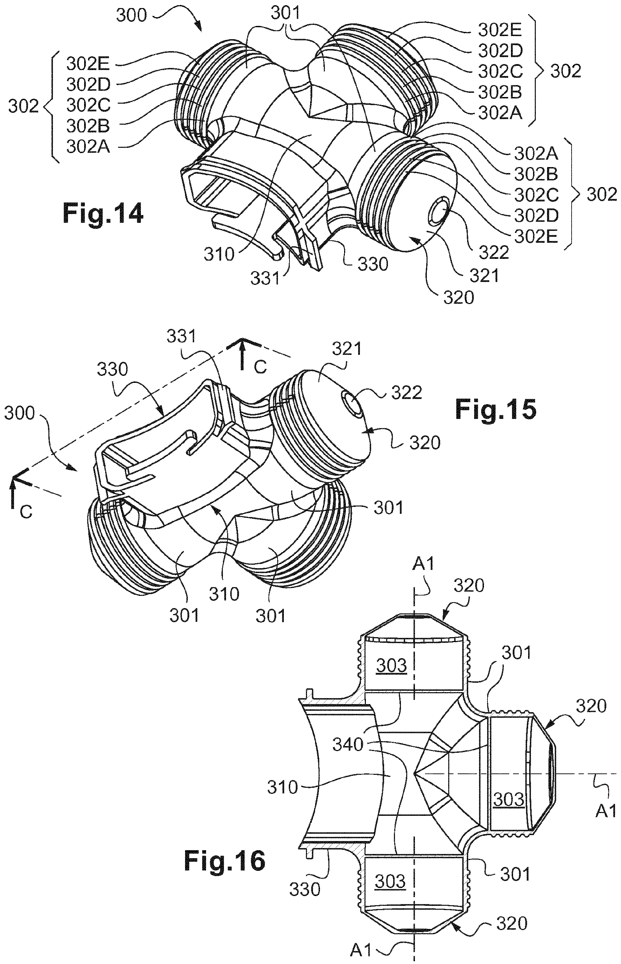

On peut enfin décrire, en référence aux figures 14 à 16, le troisième mode de réalisation de l'embout 300.

Dans ce troisième mode, l'embout 300 est conçu pour connecter trois gaines de cheminement 30 à l'ouverture d'entrée de câbles de l'étrier 41 de boîte électrique.

Il comporte à cet effet une embase creuse 330 identique à celle de l'embout 200 représenté sur la figure 8, et trois parois tubulaires 301 du même type, fixées à cette embase creuse 330.

Ici, deux premières des trois parois tubulaires 301 s'étendent dans des directions opposées, selon un même axe d'engagement A1 qui est orthogonal à l'axe d'engagement A1 de la troisième paroi tubulaire 301.

Ces deux premières parois tubulaires 301 sont identiques, tandis que la troisième paroi tubulaire 301 présente un diamètre supérieur à celui de ces deux premières parois tubulaires.

Ces trois parois tubulaires 301 présentent des formes assez proches de celles des parois tubulaires 201 de l'embout 200 représenté sur la figure 8.

Leurs parties de fixation 310 diffèrent toutefois de celles de cet embout 200 en ce sens qu'elles se prolongent et se confondent en une coque permettant de connecter entre elles les trois parois tubulaires 301 et l'embase creuse 330.

Leurs lèvres périphériques 321 diffèrent de celles de l'embout 200 représenté sur la figure 8 en ce sens qu'elles sont dépourvues de bourrelet. Les ouvertures circulaires qu'elles délimitent sont ici fermées par des opercules 322 détachables, qui permettent d'assurer une fonction d'étanchéité lorsque l'une des parois tubulaires 301 demeure inutilisée.

Ces opercules 322 présentent ici des formes planes. En variante, ils pourraient s'étendre dans le prolongement des lèvres périphériques 321, de manière que ces lèvres périphériques 321 présentent globalement des formes, non plus tronconiques, mais coniques.

Enfin, dans ce troisième de mode de réalisation, les parties de rigidification 302 de l'embout 300 diffèrent de celles de l'embout 200 représenté sur la figure 8 en ce sens qu'elles sont chacune formées par une succession de cinq nervures périphériques 302A, 302B, 302C, 302D, 302E qui s'étendent autour du conduit de passage 301, dans des plans parallèles.

Ici, cet embout 300 est réalisé au moyen d'une opération de moulage par soufflage d'une matière souple.

La présente invention n'est nullement limitée aux modes de réalisation décrits et représentés, mais l'homme du métier saura y apporter toute variante conforme à son esprit.

En particulier, on aurait pu prévoir que la membrane d'étanchéité soit située ailleurs qu'au niveau de l'extrémité distale de la paroi tubulaire de l'embout.

Selon une autre variante, on aurait pu prévoir que l'élément de rigidification soit formé, non pas par une surépaisseur en saillie de la paroi tubulaire, mais plutôt par un insert incorporé à cette paroi, cet insert étant alors réalisé dans une matière plus rigide que la lèvre périphérique, par exemple en ABS.

## Revendications

1. Embout (100 ; 200 ; 300) d'entrée de conducteurs électriques (10, 11, 12) dans une boîte électrique (20), comportant une paroi (101 ; 201 ; 301) qui délimite un canal (103 ; 203 ; 303) pour le passage des conducteurs électriques (10, 11, 12) selon un axe d'insertion (A1) longitudinal, cette paroi (101 ; 201 ; 301) comprenant :
- du côté d'une extrémité distale, une partie de fixation (110 ; 210 ; 310) pour sa fixation à une boîte électrique (20), et
- du côté d'une extrémité proximale, des moyens de connexion (120 ; 220 ; 320) à une gaine de cheminement (30) pour conducteurs électriques (10, 11, 12),
ledit embout (100; 200; 300) comprenant en outre une membrane d'étanchéité (140 ; 240 ; 340) qui s'étend transversalement audit axe d'insertion (A1), et qui est adaptée à être traversée par les conducteurs électriques (10, 11, 12) circulant dans ledit canal (103 ; 203 ; 303),
**caractérisé en ce que** lesdits moyens de connexion (120; 220; 320) comportent une lèvre périphérique (121 ; 221 ; 321), distincte de la membrane d'étanchéité (140 ; 240 ; 340), qui s'étend à partir de ladite paroi (101 ; 201 ; 301), en direction dudit axe d'insertion (A1), et
**en ce que** la paroi (101 ; 201 ; 301) comporte, sur une partie au moins de sa longueur, un élément de rigidification (102 ; 202 ; 302) qui présente une rigidité à la flexion supérieure à celle de la lèvre périphérique (121 ; 221 ; 321).

2. Embout (100; 200; 300) selon la revendication précédente, dans lequel, ledit élément de rigidification (102 ; 202 ; 302) présentant une extrémité proximale (102A) tournée vers l'extrémité proximale de la paroi (101 ; 201 ; 301) et une extrémité distale (102B) tournée vers l'extrémité distale de la paroi (101 ; 201 ; 301), ladite lèvre périphérique (121 ; 221 ; 321) s'étend à distance de l'extrémité distale (102B) dudit élément de rigidification (102 ; 202 ; 302).

3. Embout (100 ; 200 ; 300) selon l'une des revendications précédentes, dans lequel, ledit élément de rigidification (102 ; 202 ; 302) présentant une extrémité proximale (102A) tournée vers l'extrémité proximale de la paroi (101 ; 201 ; 301) et une extrémité distale (102B) tournée vers l'extrémité distale de la paroi (101 ; 201 ; 301), ladite partie de fixation (110 ; 210 ; 310) s'étend à distance de l'extrémité distale (102B) dudit élément de rigidification (102 ; 202 ; 302).

4. Embout (100 ; 200 ; 300) selon l'une des revendications précédentes, dans lequel ledit élément de rigidification (102 ; 202 ; 302) comporte une surépaisseur en saillie sur une face externe de ladite paroi (101 ; 201 ; 301).

5. Embout (100 ; 200 ; 300) selon l'une des revendications précédentes, dans lequel la paroi (101 ; 201 ; 301) est formée d'une seule pièce mono-matière.

6. Embout (100 ; 200 ; 300) selon l'une des revendications précédentes, dans lequel ladite lèvre périphérique (121 ; 221 ; 321) présente une forme sensiblement conique ou tronconique.

7. Embout (100; 200; 300) selon la revendication précédente, dans lequel ladite lèvre périphérique (121 ; 221 ; 321) présente une épaisseur qui se réduit vers son sommet.

8. Embout (100 ; 200) selon l'une des revendications précédentes, dans lequel ladite lèvre périphérique (121 ; 221) délimite une ouverture et porte, le long de cette ouverture, un bourrelet (122 ; 222) en surépaisseur.

9. Embout (100 ; 200 ; 300) selon l'une des revendications précédentes, dans lequel ladite lèvre périphérique (121 ; 221 ; 321) et ladite membrane d'étanchéité (140 ; 240 ; 340) sont respectivement situées aux deux extrémités distale et proximale de la paroi (101 ; 201 ; 301).

10. Embout (100) selon l'une des revendications 1 à 9, dans lequel la partie de fixation (110) de la paroi (101) comporte une gorge périphérique (111) qui s'étend dans une face externe de la paroi (101).

11. Embout (200 ; 300) selon l'une des revendications 1 à 9, dans lequel la partie de fixation (210 ; 310) de la paroi (201 ; 301) est fixée à une embase creuse (230 ; 330) sur laquelle est également fixée au moins une autre paroi (201 ; 301) du même type et sur laquelle sont ménagés des moyens de montage (231 ; 331) sur une partie (22 ; 41) de la boîte électrique (20).

12. Boîte électrique (20) comportant une partie (22 ; 41) qui présente une ouverture d'entrée (45) dans laquelle est fixé un embout (100; 200; 300) conforme à l'une des revendications précédentes.
